# EUROPEAN PATENT SPECIFICATION

(11) **EP 3 994 907 B1**
(45) Date of publication and mention of the grant of the patent: **14.02.2024**
(21) Application number: 20740738.8
(22) Date of filing: 25.06.2020
(51) Int. Cl.: H04W 12/00, H04W 60/00, H04W 12/06, H04W 12/43, H04W 12/71, H04W 12/72

(54) **CONTROL METHODS FOR HANDLING MULTIPLE USER IDENTITIES PER UE**
STEUERVERFAHREN ZUR HANDHABUNG MEHRERER BENUTZERIDENTITÄTEN PRO BENUTZERGERÄT
PROCÉDÉS DE COMMANDE POUR GESTION D'IDENTITÉS D'UTILISATEURS MULTIPLES PAR UE

(30) Priority: 03.07.2019 EP 19184272
(43) Date of publication of application: 11.05.2022
(73) Proprietor: NEC Corporation, 108-8001 Tokyo (JP)
(72) Inventor: IANEV, Iskren, 69115 Heidelberg (DE); TAMURA, Toshiyuki, Tokyo 108-8001 (JP)
(74) Representative: MacDougall, Alan John Shaw
(86) International application number: PCT/JP2020/025057
(87) International publication number: WO 2021/002274

(56) References cited:
- EP-A1- 2 177 074
- EP-B1- 2 177 074
- US-A1- 2019 174 449

## Description

### [Technical Field]

The present disclosure relates to a communication system. The disclosure has particular but not exclusive relevance to wireless communication systems and devices thereof operating according to the 3rd Generation Partnership Project (3GPP) standards or equivalents or derivatives thereof. The disclosure has particular although not exclusive relevance to (multiple) user identities associated with user equipment (UE) in the so-called '5G' (or 'Next Generation') systems.

### [Background Art]

### Definitions

For the purposes of the present document, the terms and definitions given in 3GPP Technical Report (TR) 21.905 [1] and the following apply. A term defined in the present document takes precedence over the definition of the same term, if any, in 3GPP TR 21.905 [1].
user identity: information representing a user in a specific context. A user can have several user identities, e.g. a User Identity in the context of his/her profession, or a private User Identity for some aspects of private life, see 3GPP TR 22.904[5].
user identifier: a piece of information used to identify one specific User Identity in one or more systems, see 3GPP TR 22.904[5].
user identity profile: A collection of information associated with the User Identities of a user, see 3GPP TR 22.904[5].

### Background

3GPP SA2 Working Group has approved Study on the Usage of User Identifiers in the 5G System (FS_UUI5). The aim is to enhance the 5G System to allow for the creation and utilization of user-specific identities. This will allow for to provide enhanced user experience, optimized performance, and offer services to devices and users that are not part of the operator's 3GPP network. In the context of this work, the user to be identified could be an individual human user, using a UE with a certain subscription, an application running on or connecting via a UE, or a device ("thing") behind a gateway UE.

The Use cases are thoroughly discussed in 3GPP TR 22.904 and include:
- One or more users (i.e. humans) sharing one UE
- One or more users (i.e. devices) behind one gateway UE
   - One or more users (i.e. gaming applications) running on the same UE and each treated as a different user.

This work is based on the SA1 FS_LUCIA (SP-170995) study of the utility of user identities in the 3GPP System and the normative requirements for the support of user identities that were added to 3GPP Technical Specification (TS) 22.101 and TS 22.115 as part of the UIA (SP-180328) work item.

The objectives of this 3GPP SA2 study are to study how the 5G System can be enhanced to allow the operator to utilize user-specific identities in the 3GPP network. The following aspects are to be studied:
- Define the architectural assumptions that enable the support of user identities, including authentication/authorization of user identities, and the related involvement of the mobile operator network.
- What user identity specific settings and parameters need to be taken into account by the 3GPP system when delivering a service.
- What information is stored as part of the user identity profile (e.g. a user identity, user identity specific settings, charging details and parameters), and how user identity profiles are stored and updated in the 5GC, and how and what user identity profile information can be exposed to application functions (e.g. for edge computing or towards a 3rd party).
- Whether and how user identifiers are linked and unlinked with 3GPP subscriptions.
- How the network controls, or limits, the usage of user identifiers (e.g. how the operator restricts the number of simultaneously active user identifiers per UE, restricts the usage a user identifier in roaming scenarios, and suspends usage of the user identifier based on operator policy or location).
- How the network takes the user identity into account when adapting network, operator-deployed, and 3rd party service settings (e.g. policies, N6 service chain), for example, when performing network slice selection.
- How and why traffic is segregated (e.g. traffic segregation between users of the same UE for Policy Enforcement and Charging).
- How appropriate charging can be enabled when there is a separation based on user, for users using the same UE and subscription.
- Whether and if there are enhancements needed to the 3GPP System to support delivering MO and MT Services to user(s) (e.g. impacts to mobility management procedures).

US 2019/174449 A1 and EP 2 177 074 A1 relate to 3GPP registration request and to multiple user identities.

### Summary of Invention

### Technical Problem

### Problem Description

This disclosure addresses the objectives from the Study on the Usage of User Identifiers in the 5G System (FS_UUI5). For example, :
1) Whether and how user identifiers are linked and unlinked with 3GPP subscriptions.
2) What information is stored as part of the user identity profile (e.g. a user identity, user identity specific settings, charging details and parameters), and how user identity profiles are stored and updated in the 5GC.
3) Whether and if there are enhancements needed to the 3GPP System to support delivering MO and MT Services to user(s).
4) How each user(s) can be associated with network slice(s). This example is related to the following requirement: How the network takes the user identity into account when adapting network, operator-deployed, and 3rd party service settings (e.g. policies, N6 service chain), for example when performing network slice selection.

### Solution to Problem

The invention is defined by the appended claims.

According to an aspect of the present disclosure, User Equipment (3), UE, includes:
means for performing a Radio Resource Control, RRC, connection establishment procedure by transmitting, to an access network node (5), identity information for the UE (3), and a plurality of user identity information, each of which includes a user identifier for a user that uses the UE (3); means for transmitting a registration request including the identity information, and the plurality of the user identity information, to a core network node (14) for mobility management via the access network node (5);
and means for receiving a registration accept message including status information of user registration, wherein the status information of the user registration indicates whether the user registration for each user indicated by one of the plurality of the user identity information is successful or not.

According to another aspect of the present disclosure, a core network node (14) for mobility management, includes: means for receiving a registration request including identity information for User Equipment (3), UE, and a plurality of user identity information, each of which includes a user identifier for a user that uses the UE (3), from the UE (3) via an access network node (5); and means for transmitting a registration accept message including status information of user registration, wherein the status information of the user registration indicates whether the user registration for each user indicated by one of the plurality of the user identity information is successful or not.

According to another aspect of the present disclosure, a control method for User Equipment (3), UE, the control method includes: performing a Radio Resource Control, RRC, connection establishment procedure by transmitting, to an access network node (5), identity information for the UE (3), and a plurality of user identity information, each of which includes a user identifier for a user that uses the UE (3); transmitting a registration request including the identity information, and the plurality of the user identity information, to a core network node (14) for mobility management via the access network node (5); and receiving a registration accept message including status information of user registration, wherein the status information of the user registration indicates whether the user registration for each user indicated by one of the plurality of the user identity information is successful or not.

According to another aspect of the present disclosure, a control method for a core network node (14) for mobility management, the control method includes: receiving a registration request including identity information for User Equipment (3), UE, and a plurality of user identity information, each of which includes a user identifier for a user that uses the UE (3), from the UE (3) via an access network node (5); and transmitting a registration accept message including status information of user registration, wherein the status information of the user registration indicates whether the user registration for each user indicated by one of the plurality of the user identity information is successful or not.

### Advantageous Effects of Invention

In certain aspects, user equipment, a core network node, a controlling method for User equipment, a controlling method for a core network node may provide a technology for solving the problems on the Usage of User Identifiers.

### Brief Description of Drawings

[fig.1]Figure 1 illustrates schematically a UE with multiple user identities.
[fig.2]Figure 2 illustrates schematically an exemplary relationship between User(s) and Slices.
[fig.3]Figure 3 illustrates example of user identity profile.
[fig.4]Figure 4 shows an example of user identity profiles provision from outside of a 3GPP system.
[fig.5]Figure 5 illustrates schematically an exemplary way in which the 3GPP system handles the registration procedure for an UE with multiple user identities.
[fig.6]Figure 6 illustrates schematically an exemplary procedure for authentication/authorisation per user.
[fig.7]Figure 7 illustrates schematically an exemplary procedure for Network Slice-Specific Authentication and Authorization per user.
[fig.8]Figure 8 illustrates schematically an exemplary procedure for paging to one user while 2 users are sharing the UE.
[fig.9]Figure 9 illustrates schematically an exemplary procedure for paging for one or more users sharing the same UE.
[fig.10]Figure 10 illustrates schematically an exemplary procedure for PDU Session Establishment with multiple users.
[fig.11]Figure 11 schematically illustrates a mobile (cellular or wireless) telecommunication system to which the above embodiments are applicable
[fig.12]Figure 12 is a block diagram illustrating the main components of the UE shown in Figure 11.
[fig.13]Figure 13 is a block diagram illustrating the main components of an exemplary (R)AN node shown in Figure 11.
[fig.14]Figure 14 is a block diagram illustrating the main components of a generic core network node (or function) shown in Figures 1 to 10.

### Description of Embodiments

### Enablers for multiple user identities per UE 3

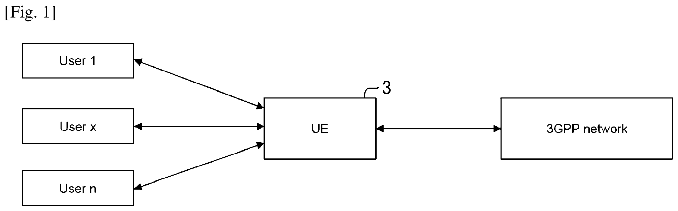

Use case: This use case assumes that different multiple users can share one UE 3 to connect to the 3GPP system and use its services, see Figure 1. This requires these users to be identified by the 3GPP system in addition to the existing identification of subscription (e.g. IMSI, TMSI, SUPI) with so called `user identifiers'. The `user identifiers' can be provided as an addition to the UE Id by the 3GPP system or by outside provider (e.g. a Service Provider) and they can be a part of the UE subscription. The 3GPP system shall be able to provide a `user identifier' to a user. The `user identifier' shall be independent of the existing identifiers relating to subscription. That is, the unit of subject to identification of `user identifier' is different from the unit of subject to identification of the existing identifiers relating to subscription.

Figure 1 illustrates schematically a UE 3 with multiple user identities.

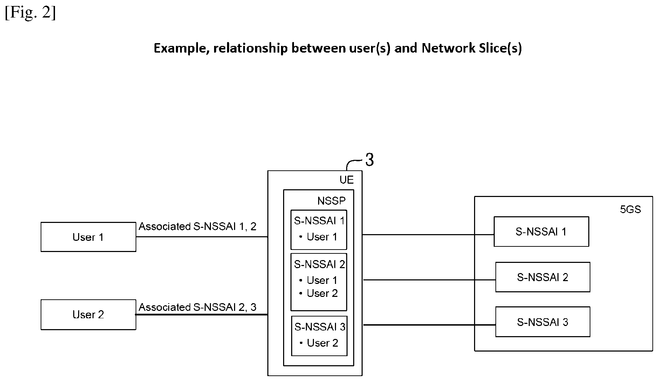

Figure 2 illustrates schematically an exemplary relationship between User(s) and Slices. This relationship may be per access type basis.
- Each User has its own associated network slices.
   + UE policy, for example the NSSP in the UE 3 maintains association between the S-NSSAI(s) and the users (i.e. S-NSSAI(s) per user).
   + The UDM 720 maintains the association between the S-NSSAI(s) per users and subscribed S-NSSAI(s) per user.
- The requested/allowed/subscribed S-NSSAI(s) per UE 3 may be a sum of S-NSSAI(s) for all user(s) that are associated to the same UE 3.
- Allowed S-NSSAI(s) can be provided by the AMF 750 per user basis.
- Network Slice authentication can be done per user basis.

The user can be a human, an application, a connected device (e.g. CIoT devices) and etc.

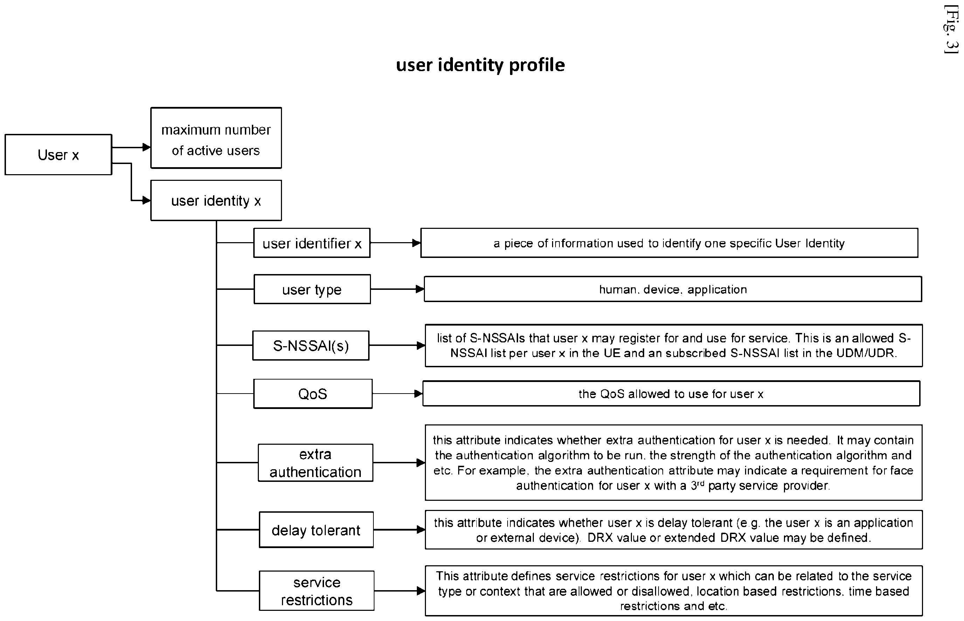

Each user can have one or more user identities where each user identity can be identified by user identifier and a set of attributes creating a user identity profile, see Figure 3. This structured user identity profile can be maintained by the UE 3, the UDM 720/UDR 710 and the AMF 750 when the UE 3 is registered (e.g. in the UE context). The user identity profile may be per access type basis.

In addition to the structured user identity profile, the UDM 720/ UDR 710 may have a subscription data that defines the maximum number of user identities that UE 3 is allowed to register for and/or to activate PDU session(s) at the same time. This subscription data is retrieved by the AMF 750 and/or SMF 780 in order to control the maximum number of the users and/or the maximum number of PDU sessions activated at the same time.

### Embodiment 1 - UE user identities provision and configuration into the 3GPP system

A UE 3 can be used by multiple users with one or more user identities. Each user identity is identified by the user identifier and may be linked to specific attributes creating the user identity profile. The user identity profiles (including the user identifiers) for an UE 3 can be provided as part of the UE subscription information by the 3GPP system itself or by a 3rd party provider, e.g. Service Provider.

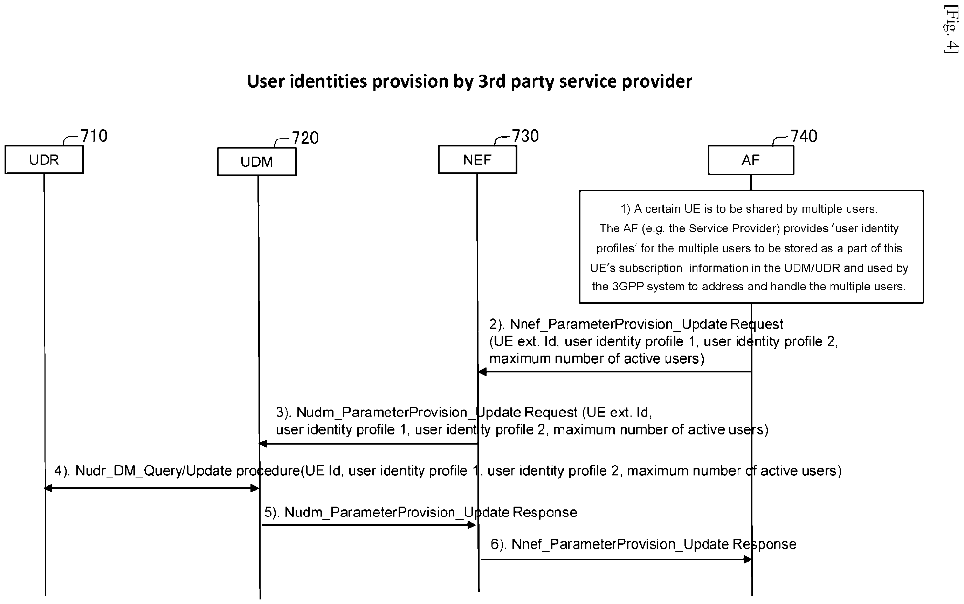

Figure 4 shows an example of user identity profiles provision from outside of a 3GPP system (e.g. by a 3rd party service provider). The example in Figure 4 is for 2 user identities, however, the same principle is applicable for the case of more than 2 user identities per UE 3. The exemplary user identity profiles provision or configuration process in Figure 4 comprises (at least some of) the following steps:
1). A certain UE 3 is to be shared by multiple users. The AF 740 (e.g. the Service Provider) is to provide the user identity profiles for the multiple users to the 3GPP system in order for them to be stored as a part of related UE's subscription information in the UDR 710 and used by the 3GPP system to address and handle the multiple users.
   In addition, the AF 740 (e.g. Service provider or 3rd party) may also provide a parameter the maximum number of active users. This parameter defines the maximum user(s) that is allowed to activate PDU session at the same time.
2). Nnef_ParameterProvision_Update Request (UE ext. Id, user identity profile 1, user identity profile 2, maximum number of active users) - The AF 740 (e.g. Service provider) provides user identity profile 1 and user identity profile 2 related to UE ext. Id to be added or updated as attributes of this UE's subscription information in the UDM 720/ UDR 710. The UE 3 is identified with its UE ext. Id (e.g. GPSI - Generic Public Subscription Identifier or MSISDN). The Nnef_ParameterProvision_Update request may also contain PDU Session related information (i.e. S-NSSAI, DNN, etc.) on a per user identity basis.
3). Nudm_ParameterProvision_Update Request (UE ext. Id, user identity profile 1, user identity profile 2, maximum number of active users) - If the AF 740 is authorised by the NEF 730 for provision of the parameters, the NEF 730 sends a requests to the UDM 720 to update and/or store the provisioned parameters (user identity profile 1, user identity profile 2) as part of the subscriber data linked to the UE Id via Nudm_ParameterProvision_Update Request message. If the AF 740 (the requesting entity) is not authorised for data provision/update, then the NEF 730 continues in step 6 indicating the reason to failure in Nnef_ParameterProvision_Update Response message.
4). Nudr DM_Query/Update procedure (UE Id, user identity profile 1, user identity profile 2, maximum number of active users) - The UDM 720 may read from the UDR 710, by means of Nudr DM_Query corresponding subscriber information in order to validate required data updates and authorize these changes for this subscriber for the corresponding AF 740. If the AF 740 is authorised by the UDM 720 for provision the user identity profile 1, user identity profile 2 for this subscriber identified by the UE ext. Id, the UDM 720 resolves the UE ext. Id to UE Id under which the UE 3 is known in the 3GPP System (e.g. SUPI, SUCI, IMSI, 4G/5G-GUTI, 4G/5G-TMSI) and requests to update and store the provisioned user identity profile 1, user identity profile 2 as part of the subscriber data linked to UE identified by the UE Id via Nudr_DM_Update Request message, the message includes the provisioned data user identity profile 1, user identity profile 2. Nudr_DM_Update Request message may also contain a PDU Session related information (i.e. S-NSSAI, DNN, etc) on a per user identifier basis.
   The UDR 710 stores the provisioned data as part of the UE subscription data and responds with Nudr_DM_Update Response message. The user identity profile 1, user identity profile 2 may be associated with a validity time. The validity time is stored at the UDM 720/ UDR 710 and in each of the NFs, to which user identity profile 1, user identity profile 2 are provisioned (e.g. in the AMF 750 or SMF 780). Upon expiration of the validity time, each node deletes the user identity profile 1, user identity profile 2 autonomously without explicit signalling.
5). Nudm_ParameterProvision_Update Response - The UDM 720 responds the request with Nudm_ParameterProvision_Update Response. If the procedure failed, the cause value indicates the reason. For example, if there is an agreement, between PLMN operator and the AF 740 provided by 3rd party with regard to the maximum number of user(s) that can be subscribed to the UE 3 and the Nudm_ParameterProvision_Update Request message requests to add more than the maximum number of users, then cause value indicates to the AF 740 via the NEF 730 that the maximum number of user(s) is exceeded.
6). Nnef_ParameterProvision_Update Response - The NEF 730 responds the request with Nnef_ParameterProvision_Update Response. If the procedure failed, the cause value indicates the reason, see the example in step 5.

### Embodiment 2 - Registration for UE 3 with multiple users

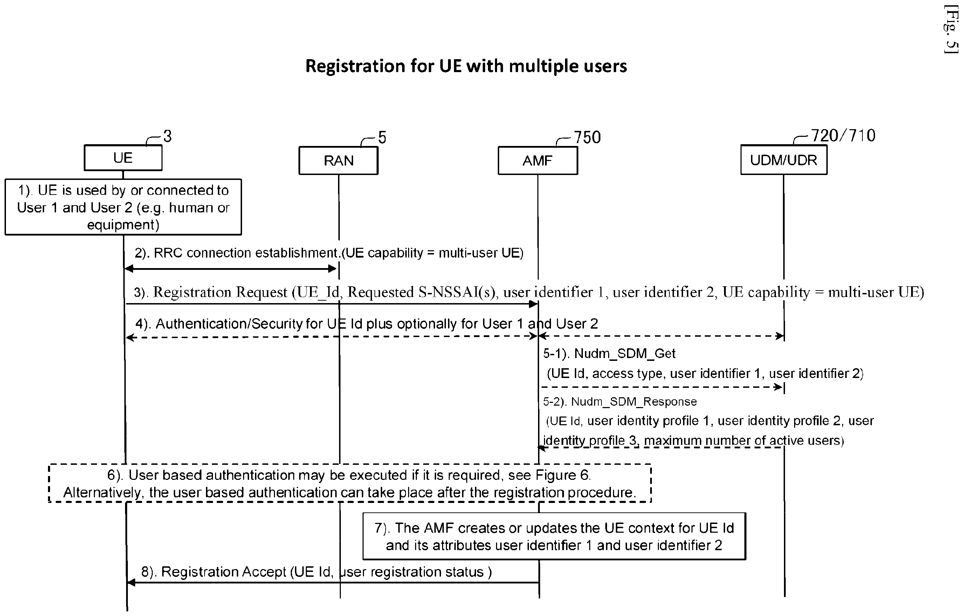

Figure 5 illustrates schematically an exemplary way in which the 3GPP system handles the registration procedure for an UE 3 with multiple user identities:
1). An UE 3 can be connected and used by user 1 and user 2 with identities user identifier 1 and user identifier 2 (e.g. used by more than one humans or connected to more than one devices). This example use case is for a UE shared by/connected to 2 users however, the use case is applicable for any number of users.
2) RRC connection establishment. (UE capability = multi-user UE) -To register to a network, the UE 3 first establishes an RRC connection. If the UE 3 is a multi-user UE (i.e. connected or serving multiple users) the UE 3 indicates its `multi-user UE' capability within the radio capability information element during the RRC connection establishment. The `multi-user UE' capability parameter could be used by the RAN node 5 to select an AMF 750 that is capable of serving UEs 3 with multiple users.
3). Registration Request (UE Id, Requested S-NSSAI(s), user identifier 1, user indenter 2, UE capability = multi-user UE) - A multi-user UE 3 requests a registration for user 1 (identified by user identifier 1 or any other notation for user or user identity identification) and for user 2 (user identifier 2 or any other notation for user or user identity identification). Apart from the UE Id (e.g. SUPI or SUCI or IMSI or 4G/5G-GUTI or 4G/5G-TMSI) the UE 3 includes the identities for user 1 and user 2 - user identifier 1 and user identifier 2. The UE 3 also includes in the Registration Request message a new parameter `multi-user UE' or any other notation for a parameter in order to indicate to the AMF 750 that the UE 3 is used by multiple users. Registration Request message may have user based requested S-NSSAI(s) per user identifier in addition to the requested NSSAI.
4). Authentication/Security for UE Id plus optionally for User 1 and User 2. Based on the `extra authentication' attribute information in the user identity profiles of user identifier 1 and user identifier 2 (see Figure 3), there are multiple alternatives with the authentication procedures:
   a) No extra user authentication is needed - this a case where only UE authentications is needed and no extra `per user' authentication is required.
   b) Extra or secondary authentication is needed - this is when one or more users require extra authentication, i.e. user specific authentication and authorisation. In this case the extra authentication could be run by the 3GPP system or 3rd party authentication is applied. Different users may need to apply different authentication algorithms and/or strength. The AMF 750 takes the information about the required authentication procedure from the user identity profile's extra authentication attribute.
5-1). The AMF 750 sends the Nudm_SDM_Get (UE Id, access type, user identifier 1, user identifier 2) to the UDM 720/ UDR 710 to request the subscription details for the UE 3 and the users of that UE 3. The AMF 750 may populate user identifier 1 and user identifier 2 that the UE has sent to the AMF 750.
5-2). The UDM 720/ UDR 710 sends the Nudm_SDM_Response (UE Id, user identity profile 1, user identity profile 2, user identity profile 3, maximum number of active users) - the UDM 720/ UDR 710 provides all user identity profiles that the UE 3 has engaged with. The user identity profiles may be based on the access type that is sent in step 5-1. For example, the UE 3 requests to use user identifier 1 and user identifier 2 while the UE 3 has three user identities, user identifier 1, user identifier 2 and user identifier 3 are subscribed.

The UDM 720/ UDR 710 also provides the parameter maximum number of active users. This parameter will be referred by the AMF 750 when the UE 3 requests PDU session establishment or Service request.

The UDM 720/ UDR 710 also provides user based subscribed S-NSSAI per user identifier in addition to the subscribed NSSAI for that UE 3.

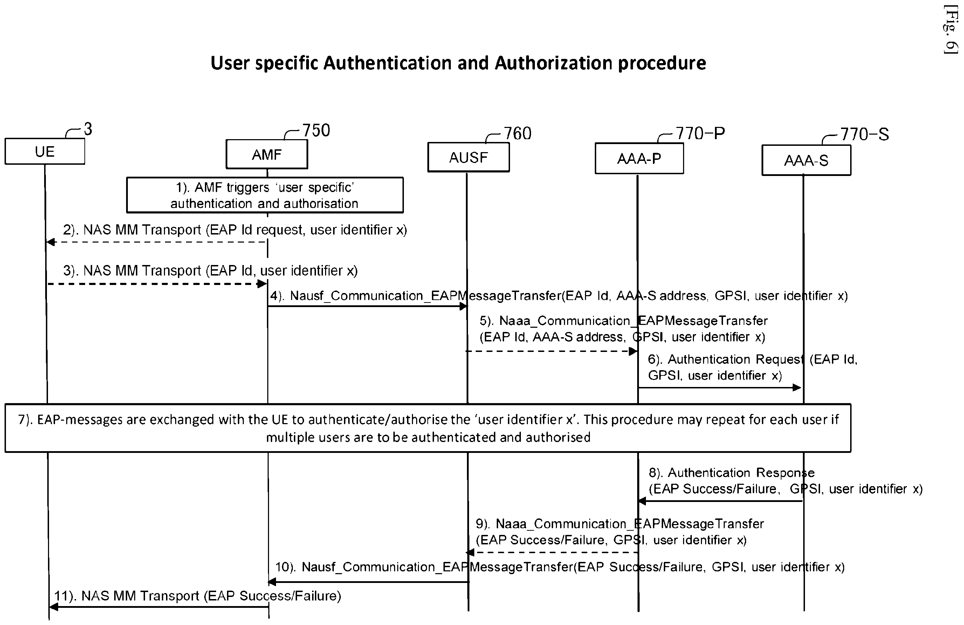

6). User based/specific Authentication and Authorization procedure may be executed, if required by the `extra authentication' attribute in the user identity profile, after the AMF 750 obtains the UE subscriber data in step 5 within the registration procedure, see Figure 6. Alternatively, the user based/specific Authentication and/or Authorisation procedure may be executed after the registration procedure has finished. In this case the registration procedure is accepted for users that did not need the extra user specific Authentication and/or Authorisation and the users that have not been and authorised yet are marked as pending in the Registration Accept message.

The User based Authentication and Authorization procedure may also be executed before step 5, e.g. immediately after the UE Authentication and/or Authorisation procedure.

7). The AMF 750 creates or updates the UE context for UE 3 with the user identity profiles for user identifier 1 and user identifier 2. The AMF 750 may only create or update the UE context for UE 3 with the user identity profiles for user identifier 1 and user identifier 2 after successful user based Authentication and Authorization procedure in step 6.

8). Registration Accept (UE Id, user registration status) - The AMF 750 returns a Registration Accept message to the UE 3 indicating that the Registration Request has been accepted.

In case the requested S-NSSAI in the registration request message in step 3 is associated with only a user identifier and the User based Authentication and Authorization procedure to that user identifier failed in step 6, then the AMF 750 does not include the requested S-NSSAI to the allowed S-NSSAI list in the Registration Accept message.

The AMF 750 confirms the registration status of the UE 3 for each user in a separate designated parameters or within the `user registration status' parameter (or any other notation for a structure that contains information for the registration status of an user). Regardless of the format and structure of the per user registration status confirmation from the AMF 750, there are multiple alternatives to confirm the registration status for each user. The Registration Accept message may have user based allowed S-NSSAI per user identifier in addition to the allowed NSSAI.

For example the user x registration status parameter/field (that contains the registration status for specific user (user x for example) and can be part of the user registration status parameter returned within the Registration Accept message) may comprise the following information (e.g. fields or records) per user x:

user x registration status:
- registration status - this field may indicate whether the registration for user x is successful or not. It may indicate 'registered' status if the user x has been successfully registered with the network or `not registered' if user x has been rejected for a registration. If registration has been rejected, the network shall include a user registration reject cause and the UE 3 shall follow the behaviour requirements related to the user x registration reject cause value.
- temporary user Id to user x - the AMF 750 may use the user's user identifier to address the user or alternatively the AMF 750 may assign temporary Id for user x, e.g. temporary user Id. The temporary user Id may be assigned to the user during the registration procedure for security reason i.e. to conceal the user's permanent Id which is the user identifier. When the UE 3 changes the registration area, the AMF 750 may change the temporary user Id for the user. In fact, the AMF 750 may change the temporary user Id for user x at any time by initiating re-registration procedure or via the UE Configuration Update procedure. This temporary user Id may be used when the 5GS performs the MT procedure for user x. The temporary user Id may have a form of 5G-TMSI or another Id similar to the 5G-TMSI. Temporary user Id may be distinguishable from the 5G-TMSI for UE 3. One temporary user Id may be assigned to multiple users. In this case, the 5GS can page multiple users with a single paging.
- user reject cause - This field may indicate the cause for rejecting registration for user x. Possible user registration reject cause values are:
   + no user subscription; At receiving no user subscription rejection cause value for user x, the UE 3 shall not make another registration attempt for user x in the current PLMN until the UE 3 is switched OFF and ON again.
   + user subscription expired; At receiving user subscription expired rejection cause value for user x, the UE 3 shall not make another registration attempt for user x in the current PLMN until the UE 3 is switched OFF and ON again.
   + user forbidden location; (e.g. forbidden cell/TA/Registration Area) - this reject cause value is returned when a cell or list of cells or TA or the Registration area are not allowed for that user x. At receiving one of these user forbidden location reject cause values, the UE 3 shall not attempt another registration while the UE 3 is in the forbidden location area.
   + network temporarily unavailable - this reject cause is returned by the network when the network is temporary unavailable for user x. In this case the network may return a user back-off timer as well. If the UE 3 has received a user back-off timer, the UE 3 shall not attempt another registration for user x until the expiry of the user back-off timer.
- user back-off timer - The network may return a user back-off timer as an addition to the reject causes. If a user back-off timer is received for one of the users, the UE 3 shall not trigger another registration attempt for that user before expiry of the user back-off timer for that user. The user back-off timer shall not apply for emergency or mobile terminated calls. The user back-off timer shall not be reset with cell or TA or RAT change. The user back-off timer shall be cancelled with the update of the registration area or PLMN change.
- user service restriction - the user registration may be accepted with some per user service restrictions. The user service restriction may be:
   + time related. For example, the network may apply time service restrictions to user x, e.g. what time of the day/week/month user x is allowed or not allowed a service. If user service restrictions are returned, the UE 3 shall obey these restrictions. If a restrictions validity timer is returned, the UE 3 shall clear the restrictions for the affected user identity after the expiry of the restrictions validity timer.
   + location related. For example, the network may apply location service restrictions to user x, e.g. user x is not allowed service in certain locations like cell, list of cells, TA, list of TAs. If user restrictions are returned, the UE 3 shall obey these restrictions. If a restrictions validity timer is returned, the UE 3 shall clear the restrictions for the affected user identity after the expiry of the restrictions validity timer.

If the attributes for the user identity profile or the user registration status changes (e.g. because of subscription changes or restrictions changes from the PCF) while the UE 3 is registered for this user, the AMF 750 uses the UE Configuration Update procedure to update the attributes for the user identity profile or the user registration status. The AMF 750 includes in the UE Configuration Update message the impacted user Id and the attributes for the new user identity profile or the user registration status. If the UE 3 is in Idle mode, the AMF 750 first pages the UE 3 and/or the user and then triggers the UE Configuration Update procedure. The UE Configuration Update procedure may request the UE 3 to re-register after the update. If the AMF 750 requested re-registration, the UE 3 first updates the modified user attributes and/or user registration status and triggers a new Registration procedure using the newly updated parameters.

### Embodiment 3 - User based Authentication and Authorization procedure per user

Figure 6 illustrates schematically an exemplary procedure for authentication/authorisation per user:
1). After the standard UE authentication/authorisation procedure during the registration procedure, the AMF 750 may trigger an user-specific authentication/authorisation procedure when one or more users require user based authentication/authorisation with an AAA Server (AAA-S) 770-S which may be hosted by the HPLMN operator or a third party which has a business relationship with the HPLMN. The AMF 750 may determine the need for user specific authentication based on the user's subscription `user identity profile' in the UDM 720/ UDR 710. For example, the AMF 750 triggers `user specific' authentication and authorisation for `user identifier x'.
2). The AMF 750 may request from the UE 3 the EAP Id (Enhanced Authentication Protocol Id) for the `user identifier x' in a NAS MM Transport message (EAP Id request, user identifier x).
3). The UE 3 provides the EAP Id for the user identifier x alongside the user identifier x itself in NAS MM Transport message (EAP Id, user identifier x) towards the AMF 750. The EAP Id provides the EAP authentication method and parameters.
4). The AMF 750 sends the EAP Id to the AUSF 760 in a Nausf_Communication_EAPMessage Transfer (EAP Id, AAA-S address, GPSI, user identifier x). In one example, the user identifier x can be concatenated with the GPSI.
5). If the AAA-P 770-P is present (e.g. because the AAA-S 770-S belongs to a third party), the AUSF 760 invokes the Naaa_Communication_EAPMessageTransfer (EAP Id, AAA-S address, GPSI, user identifier x) service to forward the message to the AAA-P 770-P otherwise the AUSF 760 forwards the message directly to the AAA-S 770-S.
6). The AAA-P 770-P associates AAA-S address with the user identifier x and forwards the EAP Identity message to the AAA-S 770-S addressable by the AAA-S address together with the user identifier x and GPSI.
7). EAP-messages are exchanged with the UE 3 to authenticate/authorise the `user identifier x'. This procedure may repeat per each user if multiple users are to be authenticated and authorised.
8). EAP authentication completes. An EAP-Success/Failure message is delivered to the AAA-P 770-P (or if the AAA-P 770-P is not present, directly to the AUSF 760) with GPSI and user identifier x.
9). If the AAA-P 770-P is used, the AAA-P 770-P sends the Naaa_Communication_EAPMessage Transfer (EAP-Success/Failure, user identifier x, GPSI) to the AUSF 760.
10). The AUSF 760 sends the Nausf_Communication_EAPMessageTransfer (EAP-Success/Failure, user identifier x, GPSI) to the AMF 750.
11). The AMF 750 transmits a NAS MM Transport message (EAP-Success/Failure) to the UE 3.

If the Network user-specific Authentication and Authorization fails for all users, the AMF 750 shall execute the Network-initiated Deregistration procedure described in clause 4.2.2.3.3 of TS23.502 and it shall include in the explicit De-Registration Request message the list of Rejected users and an appropriate rejection cause value for each rejected user.

The User specific Authentication and Authorisation procedure in Figure 6 can be initiated by the AMF 750 anytime. Below are listed some example of procedure that can trigger the User specific Authorisation and Authentication procedure:
- When the AMF 750 receives the PDU Session Establishment Request message from the UE 3.
- When the AMF 750 receives the Service request message from the UE 3.
- After the AMF 750 performs the UE Configuration Update procedure.
- After the Handover procedure takes place.

### Embodiment 4 - Network Slice-Specific Authentication and Authorization per user

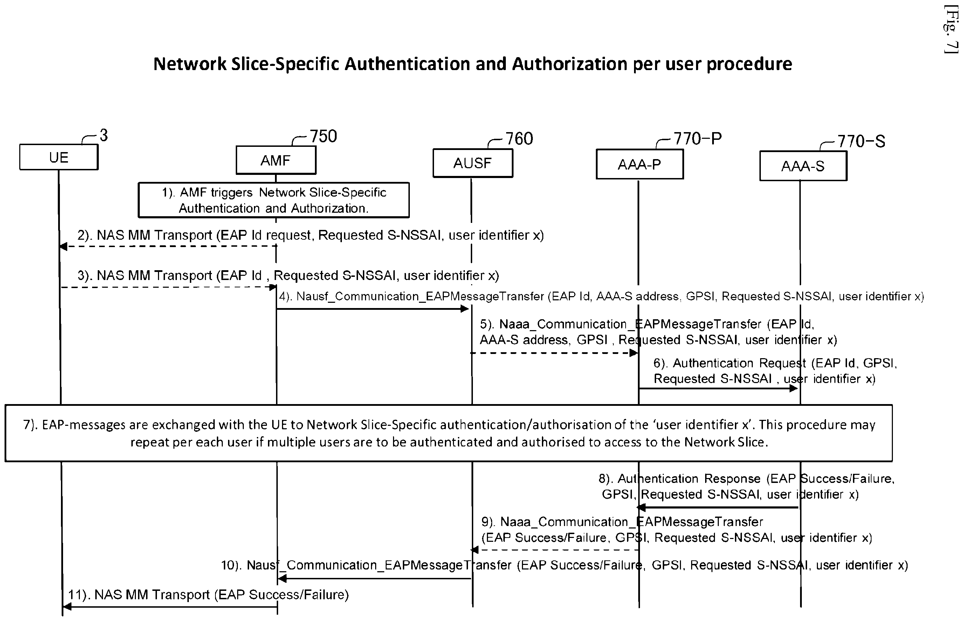

Figure 7 illustrates schematically an exemplary procedure for Network Slice-Specific Authentication and Authorization per user:
1). After the standard registration procedure, the AMF 750 may trigger a Network Slice-Specific Authentication and Authorization per user procedure when one or more users require user based Network Slice-Specific Authentication and Authorization with an AAA Server (AAA-S) 770-S which may be hosted by the HPLMN operator or a third party which has a business relationship with the HPLMN. The AMF 750 may determine the need for Network Slice-Specific Authentication and Authorization per user based on the user's subscription `user identity profile' in the UDM 720/ UDR 710. For example. The AMF 750 triggers `user specific' Network Slice-Specific Authentication and Authorization for `user identifier x'.
2). The AMF 750 may request from the UE 3 the EAP Id (Enhanced Authentication Protocol Id) for the `user identifier x' in a NAS MM Transport message (EAP Id request, Requested S-NSSAI, user identifier x).
3). The UE 3 provides the EAP Id for the user identifier x alongside the user identifier x itself in a NAS MM Transport message (EAP Id, Requested S-NSSAI, user identifier x) towards the AMF 750. The EAP Id provides the EAP authentication method and parameters.
4). The AMF 750 sends the EAP Id to the AUSF 760 in a Nausf_Communication_EAPMessage Transfer (EAP Id, AAA-S address, GPSI, Requested S-NSSAI, user identifier x). In one example, the user identifier x can be concatenated with the GPSI.
5). If the AAA-P 770-P is present (e.g. because the AAA-S 770-S belongs to a third party), the AUSF 760 invokes the Naaa_Communication_EAPMessageTransfer (EAP Id, AAA-S address, GPSI, Requested S-NSSAI, user identifier x) service to forward the message to the AAA-P 770-P otherwise the AUSF 760 forwards the message directly to the AAA-S 770-S.
6). The AAA-P 770-P associates AAA-S address with the user identifier x and forwards the EAP Identity message to the AAA-S 770-S addressable by the AAA-S address together with user identifier x and GPSI.
7). EAP-messages are exchanged with the UE 3 to authenticate/authorise the `user identifier x'. This procedure may repeat per each user if multiple users are to be authenticated and authorised.
8). EAP authentication completes. An EAP-Success/Failure message is delivered to the AAA-P 770-P (or if the AAA-P 770-P is not present, directly to the AUSF 760) with GPSI and user identifier x.
9). If the AAA-P 770-P is used, the AAA-P 770-P sends the Naaa_Communication_EAPMessage Transfer (EAP-Success/Failure, Requested S-NSSAI, user identifier x, GPSI) to the AUSF 760.
10). The AUSF 760 sends the Nausf_Communication_EAPMessageTransfer (EAP-Success/Failure, user identifier x, GPSI, Requested S-NSSAI) to the AMF 750.
11). The AMF 750 transmits a NAS MM Transport message (EAP-Success/Failure) to the UE 3.

If the Network Slice-Specific Authentication and Authorization fails for all users, the AMF 750 shall execute the Network-initiated Deregistration procedure described in clause 4.2.2.3.3 of TS23.502 and it shall include in the explicit De-Registration Request message the list of Rejected users and an appropriate rejection cause value for each rejected user.

The User specific Authentication and Authorisation procedure in Figure 6 can be initiated by the AMF 750 anytime. Below are listed some example of procedure that can trigger the User specific Authorisation and Authentication procedure:
- When the AMF 750 receives the PDU Session Establishment Request message from the UE 3.
- When the AMF 750 receives the Service request message from the UE 3.
- After the AMF 750 performs the UE Configuration Update procedure.
- After the Handover procedure takes place.

### Embodiment 5 - Mobile Terminating (MT) procedure for UE 3 with multiple users

Use Case A - Paging for one user while the UE 3 is registered for multiple users.

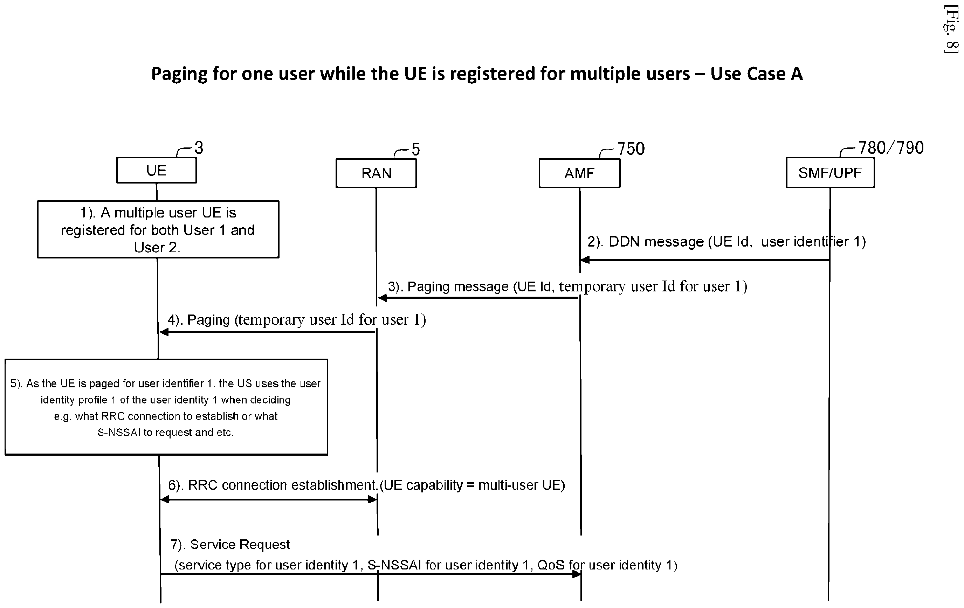

Figure 8 illustrates schematically an exemplary procedure for paging to one user while 2 users are sharing the UE 3.
1). A multiple user UE 3 is registered for both user 1 with user identity identified by the user identifier 1 and user 2 with user identity identified by the user identifier 2. This use case may be applicable for any number of users sharing or using the same UE 3.
2). Downlink Data Notification (DDN) (UE Id, user identifier 1) - The AMF 750 receives Downlink Data Notification for a UE 3 with a request for MT call for user identifier 1 of that UE 3. The UE 3 may be paged with temporary user Id that is associated with user identifier 1. The AMF 750 checks the user identity profile of the user identifier 1 in order to obtain associated temporary user Id and the paging strategy for each user and also to check for any service restrictions. If the UE 3 is in idle mode, the AMF 750 triggers the paging procedure for the UE identified by temporary user Id.

The AMF 750 may temporary user Id for the UE 3 in which case all users associated with the UE 3 will be activated.

In case a DDN message is received by the AMF 750 for a user identifier while there is another MT procedure ongoing for another user identifier, the AMF 750 performs separate paging procedures with the temporary user Id that is associated with the user identifier in the DDN message.
3). Paging message (UE Id, temporary user Id for user 1) - The AMF 750 sends a Paging message to the RAN nodes 5 in the UE's registration area and includes as a parameters the UE Id and the paged user's id, i.e. temporary user Id for user 1.
4). Paging message (temporary user Id for user 1) - The RAN Node 5 pages the UE 3 with temporary user Id for user 1.
5). As the UE 3 is reading the paging message for UE Id, for temporary user Id for user 1, the UE 3 can respond to the paging for the temporary user Id for user 1 which is paged.
6). RRC connection establishment. (UE capability = multi-user UE) - The UE 3 establishes RRC connection that reflects the requirements in the user identity profile 1.
7). Service Request (service type for user identity 1, S-NSSAI for user identity 1, QoS for user identity 1) - The UE 3 answers to the paging with Service Request message related to 1 or more users depending on what the temporary user Id being used in the page paging message in step 4. When selecting the values for the service type, the S-NSSAI to be connected to and the requested QoS parameters, the UE 3 considers the suggested values for these parameters from the user identity profile 1.

When the AMF 750 receives the Service Request message from the UE 3, the AMF 750 checks whether this request exceeds the maximum number of active users or not. If it exceeds the maximum number of active users for the UE 3, then the AMF 750 rejects this request with appropriate cause code "maximum number of active users exceeded" to the UE 3. When the UE 3 receives this new reject cause code, the UE 3 may send another Service Request message with lower number of user identities in order not to exceed the limit.

With this embodiment for Use Case A, a selective PDU session activation can be achieved for the MT procedure.

### Use Case B - Paging for multiple users

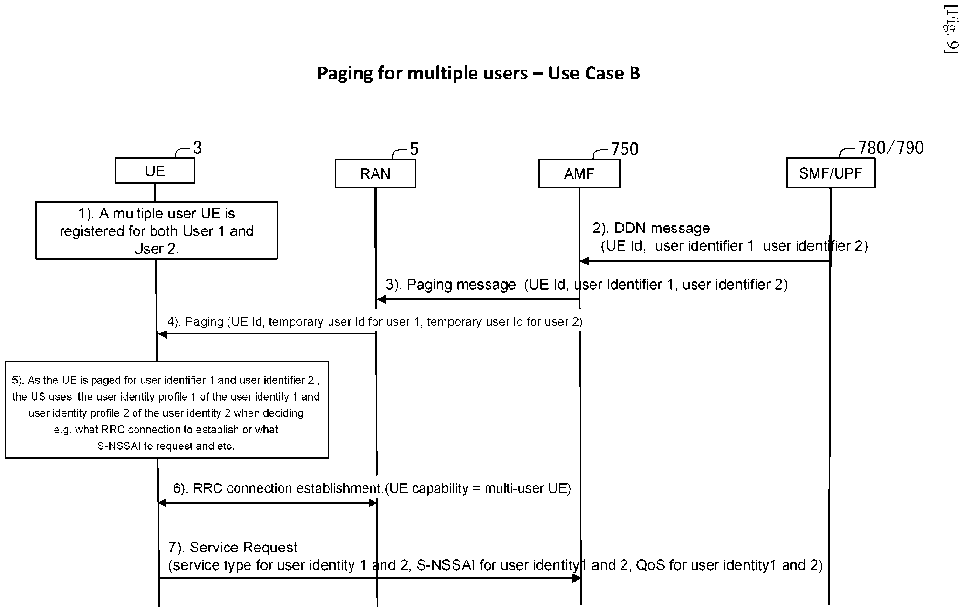

Figure 9 illustrates schematically an exemplary procedure for paging for one or more users sharing the same UE 3. The example in Figure 9 is a paging for 2 users sharing the same UE 3, however, the method of paging for multiple users per UE 3 may be applicable for paging 1 user only (for example, in the case of the same UE 3 shared by different users, e.g. people) or more users at the same time which are sharing the same UE 3 (for example, in case of multiple applications or devices sharing the same UE 3).
1). A multiple user UE 3 is registered for both user 1 with user identity identified by the user identifier 1 and user 2 with user identity identified by the user identifier 2. This use case may be applicable for any number of users sharing or using the same UE 3.
2). DDN (UE Id, user identifier 1, user identifier 2) - The AMF 750 receives Downlink Data Notification (DDN) for a UE 3 with a request for MT call for the user identifier 1 and the user identifier 2 of that UE 3. The UE 3 may be paged for only one user identity (e.g. the user identifier 1 or user identifier 2) or for two or more user identities (e.g. the user identifier 1 and user identifier 2 in this case). The AMF 750 checks the user identity profiles of the user identifier 1 and user identifier 2 in order to obtain associated temporary user Id for each user and the paging strategy for each user and also to check for any service restrictions.

In some aspects, if the DDN message carries UE Id and only one user Id (e.g. the user identifier 1 for the user 1) in case where the UE 3 is shared by the user 1 and user 2, the AMF 750 pages only user 1 by including in the Paging message the UE Id (which may be the UE Id) and the user 1 Id (e.g. user identifier 1) which also can be the temporary user Id for user 1.

In some aspects, if the DDN message carries UE Id and multiple user Ids (e.g. the user identifier 1 and user identifier 2) in case where the UE 3 is shared by the user 1, user 2 and user 3, the AMF 750 has several options:
- The AMF 750 uses for paging user 1 id (e.g. user identifier 1 or its temporary user Id) and/or user 2 id (e.g. user identifier 2 or its temporary user Id). These temporary user Ids may be independent from the UE Id.
- The AMF 750 uses for paging the UE Id and the user Id for each user (e.g. UE Id, user identifier 1 and/or user identifier 2) where user identifier 1 and user identifier 2 may also be the temporary Ids for user 1 and user 2. For example, user 1 is paged via the UE Id and the user 1 Id, `user identifier 1' (which can also be the temporary user 1 Id) which is linked to the UE Id.

3). Paging message (UE Id, user identifier 1, user identifier 2) - The AMF 750 sends a Paging message to the RAN nodes 5 in the UE's registration area and includes as a parameters the UE Id and/or the paged user Ids, i.e. user identifier 1 (or temporary user Id for user 1) and/or user identifier 2 (or temporary user Id for user 2). The user Id for user 1 and user Id for user 2 may be linked to the UE Id or independent from it.

4). Paging (UE Id, temporary user Id for user 1, temporary user Id for user 2) - The RAN Node 5 pages the UE 3 with the UE Id and/or UE Id and/or the paged user Ids, i.e. user identifier 1 (or temporary user Id for user 1) and/or user identifier 2 (or temporary user Id for user 2). The user Id for user 1 and user Id for user 2 may be linked to the UE Id or independent from it.

5). As the UE 3 is reading the paging message for the UE Id and/or for user Id for user 1 and/or for the user Id for user 2, the UE 3 can respond to the paging for user 1 and/or user 2

Below is an example of how the UE 3 could handle the UE 3 and the user Ids in the Paging message:

The UE 3 may:
- Indicate the paged user identity on the screen in case of multiple users sharing the UE 3 and the call is answered by the user that is being paged.
- Alert about the incoming call(s) the device(s) corresponding to the user Ids that are being paged in case of UE 3 is connected to multiple devices.
- notify the applications on the UE 3 or connected to the UE 3 for the incoming paging, in case the users are applications on the UE 3.

The UE 3 also uses the user identity profile 1 and/or 2 information (i.e. profiles and attributes for user identifier profile 1 and/or user identifier profile 2) when responding to the paging in terms of what RRC connection to establish (e.g. what RRC establishment cause to use) or what S-NSSAI to request in the RRC and NAS messages or what QoS to request in the Service request or PDU Session Establishment procedures.

6). RRC connection establishment. (UE capability = multi-user UE) - The UE 3 establishes RRC connection that reflects the requirements in the user identity profile 1 and/or user identifier profile 2.

7). Service Request (service type for user identity 1 and 2, S-NSSAI for user identity 1 and 2, QoS for user identity 1 and 2) - The UE 3 answers to the paging with Service Request message related to 1 or more users which are being paged in step 4. When selecting the values for the service type (e.g. normal service, priority service, delay tolerant service and etc), the S-NSSAI to be connected to and requested QoS parameters, the UE 3 considers the suggested values for these parameters from the user identity profile 1 and user identity profile 2. The UE 3 may also include the paged user identities (e.g. user identifier 1 and/or user identifier 2 in the Service Request message).

When the AMF 750 receives the Service Request message from the UE 3, the AMF 750 checks whether this request may exceed the maximum number of active users or not. If it exceeds the maximum number of active users for the UE 3, then the AMF 750 rejects this request with appropriate reject cause code "maximum number of active users exceeded" to the UE 3. When the UE 3 receives this new reject cause code, the UE 3 may re-send the Service Request message with lower number of user identities in order not to exceed the maximum number of active users limit.

With this embodiment the selective PDU session activation can also be achieved for the MT procedure.

### Embodiment 6 - PDU Session Establishment with multiple users

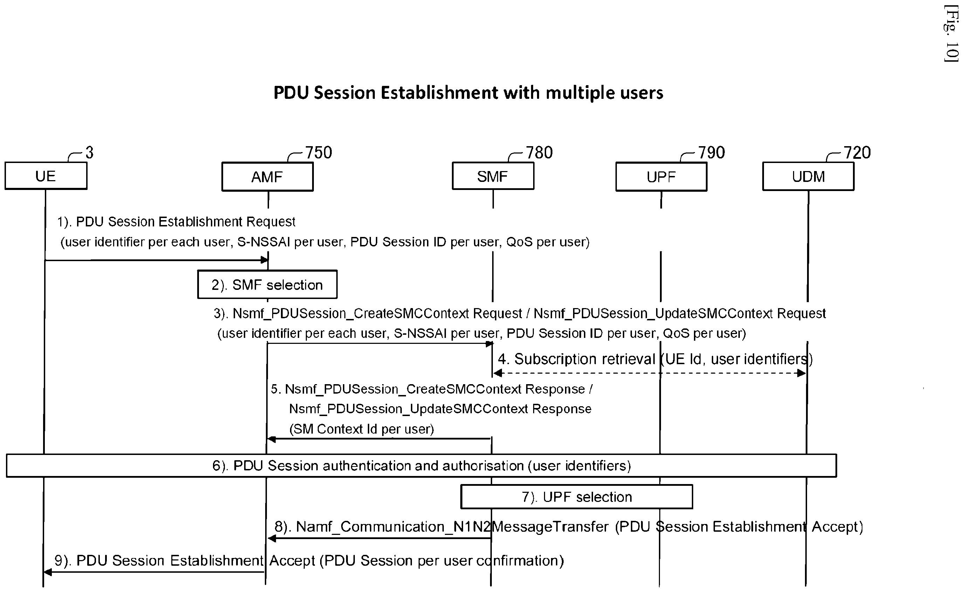

Figure 10 illustrates schematically an exemplary procedure for PDU Session Establishment with multiple users:
1). A multiple user UE 3 triggers PDU Session Establishment Request message in order to establish PDU Session for one or multiple users. The PDU Session Establishment message may contain user Ids (e.g user identifier per each user), a PDU Session Id per user, S-NSSAI per user or common S-NSSAI for multiple users and QoS per user or common QoS for multiple users. The UE 3 shall use different PDU session Ids for different users, i.e. different PDU Session Id per user identifier. It is possible that different PDU Sessions are requested on the same S-NSSAI or same DNN.
2). SMF 780 selection. Based on the provided information in the PDU Session Establishment Request message from the UE 3, the AMF 750 selects an SMF 780 as per TS23.502.
3). The AMF 750 triggers Nsmf_PDUSession_CreateSMCContext Request or Nsmf_PDUSession_UpdateSMContext Request message to the chosen SMF 780. The Nsmf_PDUSession_CreateContext Request or Nsmf_PDUSession_UpdateSMContext Request may contain user Ids (e.g user identifier per each user), a PDU Session Id per user, S-NSSAI per user and QoS per user.
4). Subscription retrieval (UE Id, user identifiers). If Session Management subscription data for corresponding users is not available, then SMF 780 retrieves the Session Management subscription data for the users from the user identity profile in the UDM 720/ UDR 710.
5). The SMF 780 returns Nsmf_PDUSession_CreateSMCContextResponse or Nsmf_PDU Session_CreateSMCContextResponse depending from the request in step 3). The SMF 780 returns PDU context Id per user.
6). PDU Session authentication and authorisation with user identifier(s). If the Request Type in step 3 indicates "Existing PDU Session", the SMF 780 may not perform secondary authentication/authorization. For new PDU Session establishment, the SMF 780 may need to perform secondary authentication/authorization during the establishment of the PDU Session as described in TS 23.501. The secondary authentication may be based on the user identifiers for which the PDU Session is being established. The secondary authentication may be based on the GPSI and user identifiers for which the PDU Session is being established. In this case the GPSI and user identifiers can form a Network Access Identifier (NAI) format by concatenating of the GPSI and user identifiers.
   In addition, the SMF 780 may initiate the Secondary Authentication procedure at any time (for example, when the SMF 780 receives the service request message from the UE 3).
7). UPF 790 selection as per 3GPP TS 23.502.
8). Namf_Communication_N1N2MessageTransfer. The Namf_Communication_N1N2 Transfer message includes the PDU Session Establishment Accept message destined to the UE 3.
9). PDU Session Establishment Accept message - The PDU Session Establishment Accept message is returned from the AMF 750 to the UE 3. It contains the SM context Id per each user identifier. As a result, a PDU session is establish per user identifier with its own charging information (e.g. CDR). There could be multiple users that have establish PDU sessions to the same S-NSSAI.

### Summary

Beneficially, the above described aspects include, although they are not limited to, one or more of the following functionalities:
1) User identity profile definition and provision as a subscription information for UEs 3 with multiple users. This allows for the network to provide differentiated services and treatment for the users based on their user identity attributes (e.g. user type, allowed S-NSSAI, QoS, authentication level, service restrictions and etc).
2) Registration for multiple users sharing the same UE 3. This allows for the network to access users behind the UE 3.
3) User-specific authentication. This allows for secondary user specific authentication for a user with the 3GPP system or 3rd party.
4) Paging or one or more users sharing the same UE 3. This allow the network to page a single user behind the UE 3 or multiple users behind the UE 3 at the same time.
5) PDU session establishment for one or multiple users. This allow for a `per user' PDU session establishment that considers the user' attributes from the user identity profile (e,g. S-NSSAI, QoS, user type and service restrictions).

In order to provide these functionalities, the above aspects describe exemplary methods comprising (at least some of) the following steps:
1) User identity profile definition and provision as a subscription information in the UDM 720/ UDR 710
2) Registration for multiple users sharing the same UE 3.
3) User specific secondary authentication
4) Paging for 1 or multiple user sharing the same UE 3.
5) PDU session establishment per user or multiple users.

### Benefits

The proposed enablers for multiple user identities per UE 3 beneficially allow the network to provide enhanced user experience, optimized performance, and offer services to devices and users that are not part of the operator's 3GPP network.

### System overview

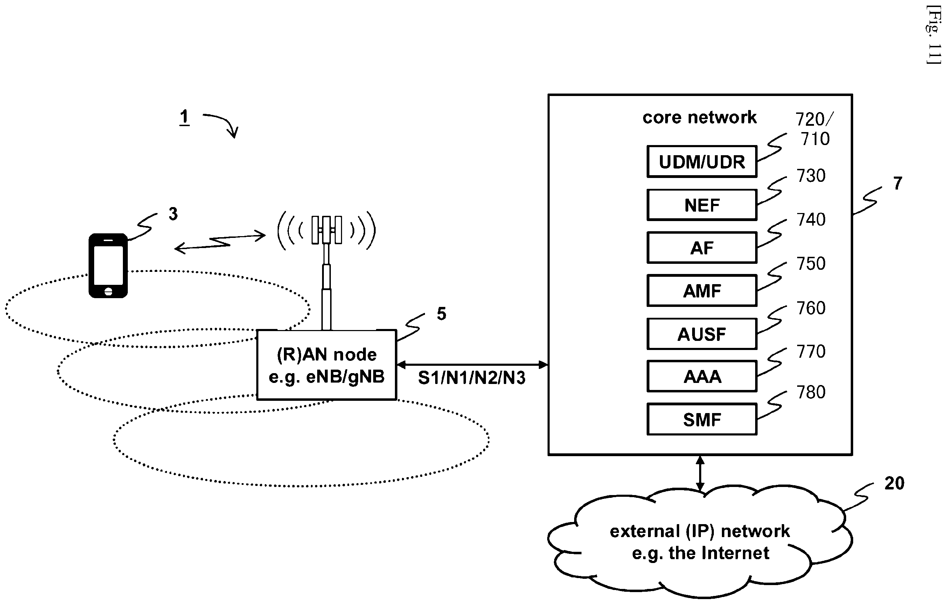

Figure 11 schematically illustrates a mobile (cellular or wireless) telecommunication system 1 to which the above embodiments are applicable.

In this network, users of mobile devices 3 (UEs) can communicate with each other and other users via respective base stations 5 and a core network 7 using an appropriate 3GPP radio access technology (RAT), for example, an E-UTRA and/or 5G RAT. It will be appreciated that a number of base stations 5 form a (radio) access network or (R)AN. As those skilled in the art will appreciate, whilst one mobile device 3 and one base station 5 are shown in Figure 11 for illustration purposes, the system, when implemented, will typically include other base stations and mobile devices (UEs).

Each base station 5 controls one or more associated cells (either directly or via other nodes such as home base stations, relays, remote radio heads, distributed units, and/or the like). A base station 5 that supports E-UTRA/4G protocols may be referred to as an 'eNB' and a base station 5 that supports Next Generation/5G protocols may be referred to as a 'gNBs'. It will be appreciated that some base stations 5 may be configured to support both 4G and 5G, and/or any other 3GPP or non-3GPP communication protocols.

The mobile device 3 and its serving base station 5 are connected via an appropriate air interface (for example the so-called 'Uu' interface and/or the like). Neighboring base stations 5 are connected to each other via an appropriate base station to base station interface (such as the so-called 'X2' interface, 'Xn' interface and/or the like). The base station 5 is also connected to the core network nodes via an appropriate interface (such as the so-called `S1', `N1', 'N2', 'N3' interface, and/or the like).

The core network 7 typically includes logical nodes (or 'functions') for supporting communication in the telecommunication system 1. Typically, for example, the core network 7 of a `Next Generation' / 5G system will include, amongst other functions, control plane functions (CPFs) and user plane functions (UPFs) 790. It will be appreciated that the core network 7 may also include, amongst others: one or more Unified Data Management (UDM) function 720/ Unified Data Repository (UDR) function 710; Network Exposure Function (NEF) 730, Application Function (AF) 740, Access and Mobility Management Function (AMF) 750; Authentication Server Function (AUSF) 760; Authentication, Authorization and Accounting (AAA) function 770; and Session Management Function (SMF) 780 / UPF 790.

From the core network 7, connection to an external IP network 20 (such as the Internet) is also provided.

The components of this system 1 are configured to perform one or more of the above described exemplary embodiments.

### User equipment (UE)

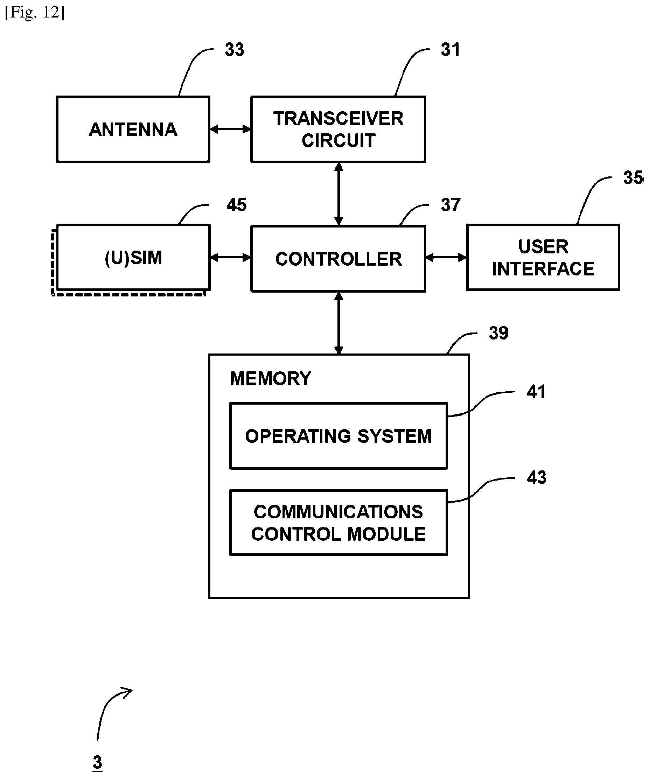

Figure 12 is a block diagram illustrating the main components of the UE (mobile device 3) shown in Figure 11. As shown, the UE includes a transceiver circuit 31 which is operable to transmit signals to and to receive signals from the connected node(s) via one or more antenna 33. Although not necessarily shown in Figure 12, the UE will of course have all the usual functionality of a conventional mobile device (such as a user interface 35) and this may be provided by any one or any combination of hardware, software and firmware, as appropriate. A controller 37 controls the operation of the UE in accordance with software stored in a memory 39. The software may be pre-installed in the memory 39 and/or may be downloaded via the telecommunication network 1 or from a removable data storage device (RMD), for example. The software includes, among other things, an operating system 41 and a communications control module 43. The communications control module 43 is responsible for handling (generating/ sending/receiving) signalling messages and uplink/downlink data packets between the UE 3 and other nodes, including (R)AN nodes 5, core network nodes, and application functions. Such signaling includes appropriately formatted requests and responses relating to multiple user identities associated with a UE.

The term "UE" refers to the mobile phone in general, which includes at least the following components:
- Mobile Equipment (ME): the ME is the "mobile phone" as the hardware device. It includes at least one processor (controller), memory unit, antenna, transceiver unit, user interface (such as screen, buttons, cable socket), battery unit, etc., as described with reference to Figure 12 above.
- Subscriber Identity Module (SIM) or Universal Subscriber Identity Module (USIM): the SIM or USIM is an application that runs in the UICC card. The UICC card is a small integrated circuit that includes an associated processor (controller), a communication module, a memory unit, and an interface unit to communicate with the ME part of the UE 3. The UICC is also called a "smart card". The processor controls the operation of the USIM in accordance with software stored in the memory. The USIM software includes, among other things, an operating system (OS), and a communications control module.

The term 'SIM' generally refers to the application in the UICC card that is used in 2G GSM mobile system. The term 'USIM' generally refers to the application in the UICC card that is used in 3G (UMTS), 4G (LTE), and 5G systems. In addition, `eSIM' is a SIM functionality embedded in the ME 30 itself, rather than being provided using a physical (removable) UICC card. In most technical context, these terms are interchangeable, and the term 'SIM' is more generic. From the perspective of the present disclosure, the terms 'SIM', 'USIM', and `eSIM' are used interchangeably. The SIM and USIM application and eSIM contain the credentials, such as the long term identifier (IMSI in 3GPP) and long term secret key.

The UE 3 may be a multi-SIM device. Typically, a multi-SIM capable mobile device is equipped with two SIM card slots, thus it is also generally referred to as a `dual-SIM phone'. In another UE implementation, the mobile device is equipped with one SIM card slot and another SIM functionality is embedded in hardware ('eSIM'). The mobile device may have an individual IMEI for each SIM, or a single IMEI common to all SIMs in the mobile device. One example of having single IMEI common to all SIMs is when a single UICC card contains multiple USIM applications.

The multi-SIM device / UE may be equipped with one or more transceiver circuits 31, depending on hardware implementation. When present, such multiple transceiver circuits 31 enable simultaneous connection using multiple SIMs.

### (R)AN node

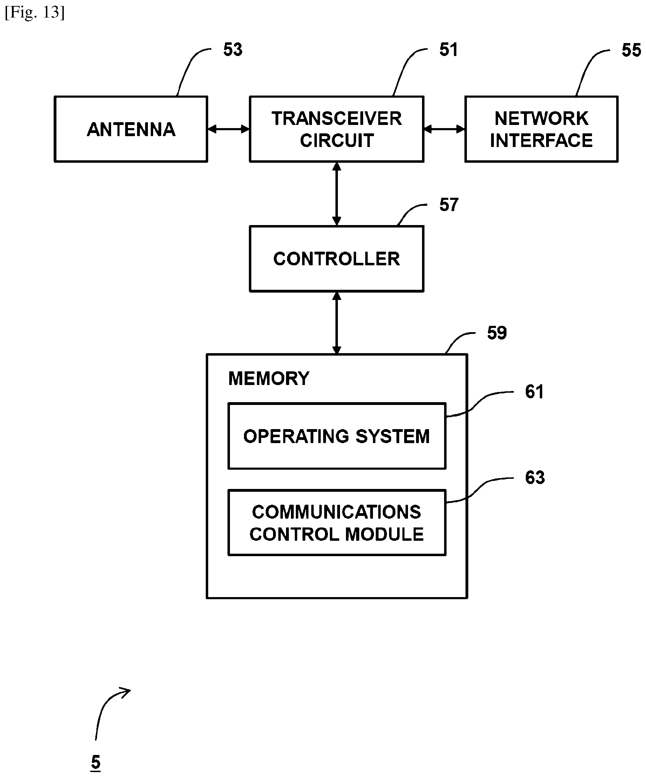

Figure 13 is a block diagram illustrating the main components of an exemplary (R)AN node 5 (base station) shown in Figure 11. As shown, the (R)AN node 5 includes a transceiver circuit 51 which is operable to transmit signals to and to receive signals from connected UE(s) 3 via one or more antenna 53 and to transmit signals to and to receive signals from other network nodes (either directly or indirectly) via a network interface 55. The network interface 55 typically includes an appropriate base station - base station interface (such as X2/Xn) and an appropriate base station - core network interface (such as S1/N1/N2/N3). A controller 57 controls the operation of the (R)AN node 5 in accordance with software stored in a memory 59. The software may be pre-installed in the memory 59 and/or may be downloaded via the telecommunication network 1 or from a removable data storage device (RMD), for example. The software includes, among other things, an operating system 61 and a communications control module 63. The communications control module 63 is responsible for handling (generating/sending/receiving) signalling between the (R)AN node 5 and other nodes, such as the UE 3 and the core network nodes / AFs 12. Such signaling includes appropriately formatted requests and responses relating to multiple user identities associated with a UE.

### Core network node

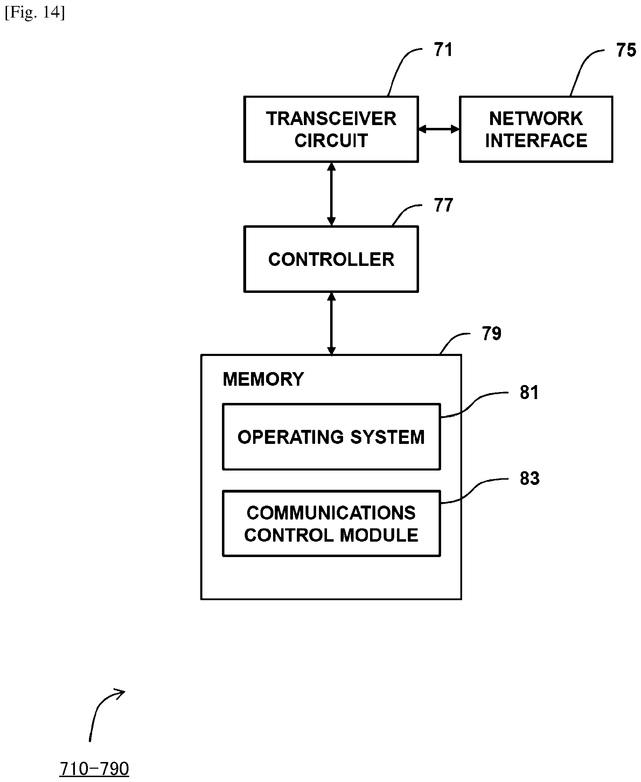

Figure 14 is a block diagram illustrating the main components of a generic core network node (or function) shown in Figures 1 to 10, for example, the UDM 720/UDR 710, the NEF 730, the AF 740, the AMF 750, the AUSF 760, the AAA 770, and the SMF 780/UPF 790. As shown, the core network node includes a transceiver circuit 71 which is operable to transmit signals to and to receive signals from other nodes (including the UE 3 and the (R)AN node 5) via a network interface 75. A controller 77 controls the operation of the core network node in accordance with software stored in a memory 79. The software may be pre-installed in the memory 79 and/or may be downloaded via the telecommunication network 1 or from a removable data storage device (RMD), for example. The software includes, among other things, an operating system 81 and at least a communications control module 83. The communications control module 83 is responsible for handling (generating/sending/ receiving) signaling between the core network node and other nodes, such as the UE 3, (R)AN node 5, the AFs 12, and other core network nodes. Such signaling includes appropriately formatted requests and responses relating to multiple user identities associated with a UE.

### Modifications and Alternatives

Detailed embodiments have been described above. As those skilled in the art will appreciate, a number of modifications and alternatives can be made to the above embodiments whilst still benefiting from the disclosures embodied therein. By way of illustration only a number of these alternatives and modifications will now be described.

In the above description, the UE, the (R)AN node, and the core network node are described for ease of understanding as having a number of discrete modules (such as the communication control modules). Whilst these modules may be provided in this way for certain applications, for example where an existing system has been modified to implement the disclosure, in other applications, for example in systems designed with the inventive features in mind from the outset, these modules may be built into the overall operating system or code and so these modules may not be discernible as discrete entities. These modules may also be implemented in software, hardware, firmware or a mix of these.

Each controller may comprise any suitable form of processing circuitry including (but not limited to), for example: one or more hardware implemented computer processors; microprocessors; central processing units (CPUs); arithmetic logic units (ALUs); input/output (IO) circuits; internal memories / caches (program and/or data); processing registers; communication buses (e.g. control, data and/or address buses); direct memory access (DMA) functions; hardware or software implemented counters, pointers and/or timers; and/or the like.

In the above embodiments, a number of software modules were described. As those skilled in the art will appreciate, the software modules may be provided in compiled or un-compiled form and may be supplied to the UE, the (R)AN node, and the core network node as a signal over a computer network, or on a recording medium. Further, the functionality performed by part or all of this software may be performed using one or more dedicated hardware circuits. However, the use of software modules is preferred as it facilitates the updating of the UE, the (R)AN node, and the core network node in order to update their functionalities.

The above embodiments are also applicable to 'non-mobile' or generally stationary user equipment.

Various other modifications will be apparent to those skilled in the art and will not be described in further detail here.

### Abbreviations

3GPP 3rd Generation Partnership Project
5GC 5G Core Network
5GS 5G System
5G-AN 5G Access Network
5G-GUTI 5G Globally Unique Temporary Identity
5G-TMSI 5G Temporary Mobile Subscriber Identity
AAA Authentication, Authorization and Accounting
AF Application Function
AMF Access and Mobility Management Function
AN Access Network
AS Access Stratum
AUSF Authentication Server Function
CDR Charging Data Record
DDN Downlink Data Notification
DNN Data Network Name
DRX Discontinuous Reception
gNB Next generation Note B
GPSI Generic Public Subscriber Identity
IMSI International Mobile Subscriber Identity
MM Mobility Management
MO Mobile Originating
MSISDN Mobile Station International Subscriber Directory Number
MT Mobile Terminating
NAS Non-Access Stratum
NEF Network Exposure Function
NF Network Function
NG-RAN Next Generation Radio Access Network
NR New Radio
NSSP Network Slice Selection Function
PCC Policy and Charging Control
PCF Policy Control Function
PDU Protocol Data Unit
PEI Permanent Equipment Identifier
PLMN Public land mobile network
QoS Quality of Service
(R)AN (Radio) Access Network
RAT Radio Access Technology
RRC Radio Resource Control
SM Session Management
SMF Session Management Function
SUCI Subscription Concealed Identifier
SUPI Subscription Permanent Identifier
S-NSSAI Single Network Slice Selection Assistance Information
TA Tracking Area
TMSI Temporary Mobile Subscriber Identity
UDM Unified Data Management
UDR Unified Data Repository
UE User Equipment

### Citation List

### Non Patent Literature

[NPL 1] 3GPP TR 21.905: "Vocabulary for 3GPP Specifications". V15.0.0 (2018-03) -
[NPL 2] 3GPP TS 23.501: "System Architecture for the 5G System; Stage 2". V16.1.0 (2019-06) - http://www.3gpp.org/ftp/Specs/archive/23_series/23.501/23501-g10.zip
[NPL 3] 3GPP TS 23.502: "Procedures for the 5G System; Stage 2" V16.140 (2019-06) - http://www.3gpp.org/ftp/Specs/archive/23_series/23.502/23502-g10.zip
[NPL 4] SA2 WID agreed in the SA pleary#84 in 2nd week of June 2019 http://www.3gpp.org/ftp/Specs/archive/23_series/23.761.zip(S2-1901392)
[NPL 5] The latest SA1 TR 22.904 Study on user centric identifiers and authentication http://www.3gpp.org/ftp/Spec s/archive/22_series/22.904/22904-g 10.zip
[NPL 6] Related CR (Network Slice-Specific Authentication and Authorization procedure) https://www.3gpp.org/ftp/tsg_sa/WG2_Arch/TSGS2_133_Reno/Docs/S2-1906592.zip

### Reference Signs List

1 TELECOMMUNICATION SYSTEM
3 MOBILE DEVICE (UE)
31 TRANSCEIVER CIRCUIT
33 ANTENNA
35 USER INTERFACE
37 CONTROLLER
39 MEMORY
41 OPERATING SYSTEM
43 COMMUNICATION CONTROL MODULE
45 (U)SIM
5 (R)AN NODE (gNB)
51 TRANSCEIVER CIRCUIT
53 ANTENNA
55 NETWORK INTERFACE
57 CONTROLLER
59 MEMORY
61 OPERATING SYSTEM
63 COMMUNICATION CONTROL MODULE
7 CORE NETWORK
71 TRANSCEIVER CIRCUIT
75 NETWORK INTERFACE
77 CONTROLLER
79 MEMORY
81 OPERATING SYSTEM
83 COMMUNICATION CONTROL MODULE
710 UDR
720 UDM
730 NEF
740 AF
750 AMF
760 AUSF
770 AAA
780 SMF
790 UPF
20 EXTERNAL IP NETWORK

## Claims

1. A control method performed by an access network node (5) and by a User Equipment (3), UE, the control method comprising:
performing, by the UE, a Radio Resource Control, RRC, connection establishment procedure by transmitting, to the access network node (5), a first capability information indicating the UE (3) is used by multiple users;
transmitting, by the UE, a registration request including identity information for the UE (3), and a plurality of user identity information, each of which includes a user identifier for a user that uses the UE (3), to a core network node (14) for mobility management via the access network node (5); and
receiving, by the UE, a registration accept message including a plurality of status information of user registration, each of which corresponds to each user indicated by one of the plurality of the user identity information, wherein
each of the plurality of the status information of the user registration indicates whether the user registration related to the each user is successful or not, and
selecting, by the access network node (5), based on the first capability information, the core network node (14) for mobility management which is capable of serving the UE (3) used by the multiple users.

2. The control method according to claim 1, wherein
the transmitting includes transmit the registration request including the identity information, the plurality of the user identity information, and second capability information indicating the UE (3) is used by multiple users, to the core network node (14) for mobility management via the access network node (5).

3. The control method according to claim 1 or 2, wherein
at least one of the plurality of the user identity information includes a parameter indicating that specific authentication for at least one user indicated by the at least one of the plurality of the user identity information is needed, and
the control method comprises performing the specific authentication with the core network node (14) for mobility management for each user for which the parameter is included in the user identity information.

4. The control method according to any one of claims 1 to 3, wherein
the each of the plurality of the status information of the user registration includes restriction information related to the each user, the restriction information indicating restriction which the UE (3) should obey.

5. The control method according to any one of claims 1 to 4, wherein
each of the plurality of the status information of the user registration includes a reject cause related to the each user, the reject cause indicating a cause for rejecting the user registration related to the each user.

6. The control method according to claim 4, wherein
the each of the plurality of the status information of the user registration includes a back-off timer related to the each user, the back-off timer causing the UE (3) not to trigger transmitting another registration request related to the each user before expiration of the back-off timer.

7. The control method according to any one of claims 1 to 6, wherein
the transmitting includes transmitting the registration request including the identity information, the plurality of user identity information and Requested Network Slice Selection Assistance Information, NSSAI, per user indicated by the one of the plurality of the user identity information, and
the receiving includes receiving the registration accept message including the plurality of the status information and Allowed NSSAI per user for which the user registration is successful.

8. A control method performed by an access network node (5) and by a core network node (14) for mobility management, the control method comprising:
performing a Radio Resource Control, RRC, connection establishment procedure by receiving, at the access network node (5) and from a User Equipment (3), UE, a first capability information indicating the UE (3) is used by multiple users;
receiving, at the core network node (14) and from the UE (3), a registration request including identity information for the UE and a plurality of user identity information, each of which includes a user identifier for a user that uses the UE (3), from the UE (3) via the access network node (5); and
transmitting, by the core network node (14) and to the UE (3), a registration accept message including a plurality of status information of user registration, each of which corresponds to each user indicated by one of the plurality of the user identity information, wherein
each of plurality of the status information of the user registration indicates whether the user registration related to the each user is successful or not, and
selecting, by the access network node (5), based on the first capability information, the core network node (14) for mobility management which is capable of serving the UE (3) used by the multiple users.

9. The control method according to claim 8, further comprising, at the core network node (14),
requesting subscription information for the each user, based on the identity information and the plurality of the user identity information;
receiving the subscription information for the each user; and
determining whether the user registration related to the each user is successful or not based on the subscription information for the each user.

10. The control method according to claim 8 or 9, wherein
the receiving includes receiving the registration request including the identity information, the plurality of the user identity information, and second capability information indicating the UE (3) is used by multiple users, from the UE (3) via the access network node (5).

11. The control method according to any one of claims 8 to 10, wherein
at least one of the plurality of the user identity information includes a parameter indicating that specific authentication for at least one user indicated by the at least one of the plurality of the user identity information is needed, and
the control method comprises performing the specific authentication with the UE (3) for each user for which the parameter is included in the user identity information.

12. The control method according to any one of claims 8 to 11, wherein
the each of the plurality of the status information of the user registration includes restriction information related to the each user, the restriction information indicating restriction which the UE (3) should obey.

13. The control method according to any one of claims 8 to 12, wherein
the each of the plurality of the status information of the user registration includes a reject cause related to the each user indicated by one of the plurality of the user identity information, the reject cause indicating a cause for rejecting the user registration related to the each user.

14. The control method according to claim 13, wherein
the each of the plurality of the status information of the user registration includes a back-off timer related to the each user, the back-off timer causing the UE (3) not to trigger transmitting another registration request related to the each user before expiration of the back-off timer.

15. The control method according to any one of claims 8 to 14, wherein
the receiving includes receiving the registration request including the identity information, the plurality of user identity information and Requested Network Slice Selection Assistance Information, NSSAI, per user indicated by the one of the plurality of the user identity information, and
the transmitting includes transmitting the registration accept message including the plurality of the status information and Allowed NSSAI per user for which the user registration is successful.

## Patentansprüche

1. Steuerverfahren, das durch einen Zugangsnetzwerkknoten (5) und durch ein Benutzergerät, UE, (3) ausgeführt wird, wobei das Steuerverfahren die Schritte aufweist:
Ausführen einer RRC-, Funkressourcensteuerung, Verbindungsaufbauprozedur durch das UE durch Übertragen einer ersten Fähigkeitsinformation, die anzeigt, dass das UE (3) durch mehrere Benutzer genutzt wird, an den Zugangsnetzwerkknoten (5);
Übertragen einer Registrierungsanforderung, die Identitätsinformation für das UE (3) und eine Vielzahl von Benutzeridentitätsinformationen enthält, von denen jede eine Benutzeridentifizierung für einen Benutzer aufweist, der das UE (3) nutzt, durch das UE an einen Kernnetzwerkknoten (14) für Mobilitätsmanagement über den Zugangsnetzwerkknoten (5); und
Empfangen einer Registrierungsannahmenachricht, die eine Vielzahl von Benutzerregistrierungsstatusinformationen enthält, von denen jede einem Benutzer entspricht, der durch eine der Vielzahl von Benutzeridentitätsinformationen angezeigt wird, durch das UE, wobei
jede der Vielzahl der Benutzerregistrierungsstatusinformationen anzeigt, ob die Benutzerregistrierung, die mit dem jeweiligen Benutzer in Beziehung steht, erfolgreich ist oder nicht; und
Auswählen des Kernnetzwerkknotens (14) für Mobilitätsmanagement, der in der Lage ist, das durch die mehreren Benutzer genutzte UE (3) zu bedienen, durch den Zugangsnetzwerkknoten (5) basierend auf der ersten Fähigkeitsinformation.

2. Steuerverfahren nach Anspruch 1, wobei
das Übertragen das Übertragen der Registrierungsanforderung einschließlich der Identitätsinformation, der Vielzahl von Benutzeridentitätsinformationen und einer zweiten Fähigkeitsinformation, die anzeigt, dass das UE (3) durch mehrere Benutzer genutzt wird, an den Kernnetzwerkknoten (14) für Mobilitätsmanagement über den Zugangsnetzwerkknoten (5) aufweist.

3. Steuerverfahren nach Anspruch 1 oder 2, wobei
mindestens eine aus der Vielzahl der Benutzeridentitätsinformationen einen Parameter enthält, der anzeigt, dass eine spezifische Authentifizierung für mindestens einen durch die mindestens eine der Vielzahl der Benutzeridentitätsinformationen angezeigten Benutzer erforderlich ist, und
das Steuerverfahren das Ausführen der spezifischen Authentifizierung mit dem Kernnetzwerkknoten (14) für Mobilitätsmanagement für jeden Benutzer aufweist, für den der Parameter in der Benutzeridentitätsinformation enthalten ist.

4. Steuerverfahren nach einem der Ansprüche 1 bis 3, wobei
jede der Vielzahl der Benutzerregistrierungsstatusinformationen Beschränkungsinformation aufweist, die mit dem jeweiligen Benutzer in Beziehung steht, wobei die Beschränkungsinformation eine Beschränkung anzeigt, die das UE (3) befolgen sollte.

5. Steuerverfahren nach einem der Ansprüche 1 bis 4, wobei
jede der Vielzahl von Benutzerregistrierungsstatusinformationen einen mit dem jeweiligen Benutzer in Beziehung stehenden Ablehnungsgrund enthält, wobei der Ablehnungsgrund einen Grund für eine Ablehnung der mit dem jeweiligen Benutzer in Beziehung stehenden Benutzerregistrierung anzeigt.

6. Steuerverfahren nach Anspruch 4, wobei
jede der Vielzahl von Benutzerregistrierungsstatusinformationen einen mit dem jeweiligen Benutzerin Beziehung stehenden Back-Off-Timer enthält, wobei der Back-Off-Timer das UE (3) veranlasst, die Übertragung einer weiteren Registrierungsanforderung, die mit dem jeweiligen Benutzer in Beziehung steht, nicht zu triggern, bevor der Back-Off-Timer abgelaufen ist.

7. Steuerverfahren nach einem der Ansprüche 1 bis 6, wobei
das Übertragen das Übertragen der Registrierungsanforderung aufweist, die die Identitätsinformation, die Vielzahl von Benutzeridentitätsinformationen und angeforderte Netzwerk-Slice-Auswahlunterstützungsinformation, NSSAI, pro Benutzer enthält, der durch die eine aus der Vielzahl der Benutzeridentitätsinformationen angezeigt wird, und
das Empfangen das Empfangen der Registrierungsannahmenachricht aufweist, die die Vielzahl von Statusinformationen und erlaubte NSSAI pro Benutzer enthält, für den die Benutzerregistrierung erfolgreich ist.

8. Steuerverfahren, das durch einen Zugangsnetzwerkknoten (5) und durch einen Kernnetzwerkknoten (14) für Mobilitätsmanagement ausgeführt wird, wobei das Steuerverfahren aufweist.
Ausführen einer RRC-, Funkressourcensteuerung, Verbindungsaufbauprozedur durch Empfangen einer ersten Fähigkeitsinformation, die anzeigt, dass das UE (3) durch mehrere Benutzer genutzt wird, am Zugangsnetzwerkknoten (5) und von einem Benutzergerät, UE, (3);
Empfangen einer Registrierungsanforderung, die Identitätsinformation für das UE und eine Vielzahl von Benutzeridentitätsinformationen enthält, die jeweils eine Benutzeridentifizierung für einen Benutzer aufweisen, der das UE (3) nutzt, am Kernnetzwerkknoten (5) und vom UE (3) über den Zugangsnetzwerkknoten (5);
Übertragen einer Registrierungsannahmenachricht, die eine Vielzahl von Benutzerregistrierungsstatusinformationen enthält, die jeweils einem Benutzer entspricht, der durch die eine der Vielzahl der Benutzeridentitätsinformationen angezeigt wird, durch den Kernnetzwerkknoten (14) an das UE (3),
wobei jede der Vielzahl von Benutzerregistrierungsstatusinformationen anzeigt, ob die mit dem jeweiligen Benutzer in Beziehung stehende Benutzerregistrierung erfolgreich ist oder nicht; und
Auswählen des Kernnetzwerkknotens (14) für Mobilitätsmanagement, der in der Lage ist, das durch die mehreren Benutzer genutzte UE (3) zu bedienen, durch den Zugangsnetzwerkknoten (5) basierend auf der ersten Fähigkeitsinformation.

9. Steuerverfahren nach Anspruch 8, ferner mit den am Kernnetzwerkknoten (14) ausgeführten Schritten:
Anfordern von Teilnehmerinformation für den jeweiligen Benutzer basierend auf der Identitätsinformation und der Vielzahl der Benutzeridentitätsinformationen;
Empfangen der Teilnehmerinformation für jeden Benutzer; und
Bestimmen, ob die mit jedem Benutzer in Beziehung stehende Benutzerregistrierung erfolgreich ist oder nicht, basierend auf der Teilnehmerinformation für jeden Benutzer.

10. Steuerverfahren nach Anspruch 8 oder 9, wobei
das Empfangen das Empfangen der Registrierungsanforderung, die die Identitätsinformation, die Vielzahl von Benutzeridentitätsinformationen und eine zweite Fähigkeitsinformation enthält, die anzeigt, dass das UE (3) durch mehrere Benutzer genutzt wird, vom UE (3) über den Zugangsnetzwerkknoten (5) aufweist.

11. Steuerverfahren nach einem der Ansprüche 8 bis 10, wobei
mindestens eine aus der Vielzahl der Benutzeridentitätsinformationen einen Parameter enthält, der anzeigt, dass eine spezifische Authentifizierung für mindestens einen Benutzer, der durch die mindestens eine der Vielzahl von Benutzeridentitätsinformationen angezeigt wird, erforderlich ist, und
das Steuerverfahren das Ausführen der spezifischen Authentifizierung durch das UE (3) für jeden Benutzer aufweist, für den der Parameter in der Benutzeridentitätsinformation enthalten ist.

12. Steuerverfahren nach einem der Ansprüche 8 bis 11, wobei
jede der Vielzahl der Benutzerregistrierungsstatusinformationen mit jedem Benutzer in Beziehung stehende Beschränkungsinformation aufweist, wobei die Beschränkungsinformation eine Beschränkung anzeigt, die das UE (3) befolgen sollte.

13. Steuerverfahren nach einem der Ansprüche 8 bis 12, wobei
jede der Vielzahl von Benutzerregistrierungsstatusinformationen eine mit dem jeweiligen Benutzer, der durch eine der Vielzahl von Benutzeridentitätsinformationen angezeigt wird, in Beziehung stehende Ablehnungsursache enthält, wobei der Ablehnungsgrund einen Grund für eine Ablehnung der mit dem jeweiligen Benutzer in Beziehung stehenden Benutzerregistrierung anzeigt.

14. Steuerverfahren nach Anspruch 13, wobei
jede aus der Vielzahl von Benutzerregistrierungsstatusinformationen einen mit dem jeweiligen Benutzer in Beziehung stehenden Back-Off-Timer enthält, wobei der Back-Off-Timer das UE (3) veranlasst, die Übertragung einer weiteren, mit dem jeweiligen Benutzer in Beziehung stehenden Registrierungsanforderung nicht zu triggern, bevor der Back-Off-Timer abgelaufen ist.

15. Steuerverfahren nach einem der Ansprüche 8 bis 14, wobei
das Empfangen das Empfangen der Registrierungsanforderung aufweist, die die Identitätsinformation, die Vielzahl von Benutzeridentitätsinformationen und die angeforderte Netzwerk-Slice-Auswahlunterstützungsinformation, NSSAI, pro Benutzer enthält, der durch die eine aus der Vielzahl der Benutzeridentitätsinformationen angezeigt wird, und
das Übertragen das Übertragen der Registrierungsannahmenachricht aufweist, die die Vielzahl von Statusinformationen und die erlaubten NSSAI pro Benutzer enthält, für den die Benutzerregistrierung erfolgreich ist.

## Revendications

1. Procédé de commande réalisé par un noeud de réseau d'accès (5) et par un équipement utilisateur, UE, (3), le procédé de commande comprenant :
la réalisation, par l'UE, d'une procédure d'établissement de connexion de commande de ressources radio, RRC, par la transmission, au noeud de réseau d'accès (5), d'une première information de capacité indiquant que l'UE (3) est utilisé par de multiples utilisateurs ;
la transmission, par l'UE, d'une demande d'enregistrement comportant des informations d'identité pour l'UE (3), et une pluralité d'informations d'identité d'utilisateur, chacune d'elles comportant un identifiant d'utilisateur pour un utilisateurqui utilise l'UE (3), à un noeud de réseau central (14) pour une gestion de mobilité via le noeud de réseau d'accès (5) ; et
la réception, par l'UE, d'un message d'acceptation d'enregistrement comportant une pluralité d'informations de statut d'enregistrement d'utilisateur, chacune d'elles correspondant à chaque utilisateur indiqué par l'une de la pluralité des informations d'identité d'utilisateur, dans lequel
chacune de la pluralité des informations de statut de l'enregistrement d'utilisateur indique si l'enregistrement d'utilisateur lié au chaque utilisateur est réussi ou non, et
la sélection, par le noeud de réseau d'accès (5), sur la base de la première information de capacité, du noeud de réseau central (14) pour une gestion de mobilité qui est capable de desservir l'UE (3) utilisé par les multiples utilisateurs.

2. Procédé de commande selon la revendication 1, dans lequel
la transmission comporte la transmission de la demande d'enregistrement comportant les informations d'identité, la pluralité des informations d'identité d'utilisateur et une deuxième information de capacité indiquant que l'UE (3) est utilisé par de multiples utilisateurs, au noeud de réseau central (14) pour une gestion de mobilité via le noeud de réseau d'accès (5).

3. Procédé de commande selon la revendication 1 ou 2, dans lequel
au moins l'une de la pluralité des informations d'identité d'utilisateur comporte un paramètre indiquant qu'une authentification spécifique pour au moins un utilisateur indiqué par l'au moins une de la pluralité des informations d'identité d'utilisateur est nécessaire, et
le procédé de commande comprend la réalisation de l'authentification spécifique avec le noeud de réseau central (14) pour une gestion de mobilité pour chaque utilisateur pour lequel le paramètre est compris dans les informations d'identité d'utilisateur.

4. Procédé de commande selon l'une quelconque des revendications 1 à 3, dans lequel
la chacune de la pluralité des informations de statut de l'enregistrement d'utilisateur comporte des informations de restriction liées au chaque utilisateur, les informations de restriction indiquant une restriction à laquelle l'UE (3) doit obéir.

5. Procédé de commande selon l'une quelconque des revendications 1 à 4, dans lequel
chacune de la pluralité des informations de statut de l'enregistrement d'utilisateur comporte une cause de rejet liée au chaque utilisateur, la cause de rejet indiquant une cause pour rejeter l'enregistrement d'utilisateur lié au chaque utilisateur.

6. Procédé de commande selon la revendication 4, dans lequel
la chacune de la pluralité des informations de statut de l'enregistrement d'utilisateur comporte un temporisateur de délai d'attente lié au chaque utilisateur, le temporisateur de délai d'attente amenant l'UE (3) à ne pas déclencher la transmission d'une autre demande d'enregistrement liée au chaque utilisateur avant une expiration du temporisateur de délai d'attente.

7. Procédé de commande selon l'une quelconque des revendications 1 à 6, dans lequel
la transmission comporte la transmission de la demande d'enregistrement comportant les informations d'identité, la pluralité d'informations d'identité d'utilisateur et des informations d'assistance à la sélection de tranche de réseau, NSSAI, demandées par utilisateur indiqué par l'une de la pluralité des informations d'identité d'utilisateur, et
la réception comporte la réception du message d'acceptation d'enregistrement comportant la pluralité des informations de statut et des NSSAI autorisées par utilisateur pour lequel l'enregistrement d'utilisateur est réussi.

8. Procédé de commande réalisé par un noeud de réseau d'accès (5) et par un noeud de réseau central (14) pour une gestion de mobilité, le procédé de commande comprenant :
la réalisation d'une procédure d'établissement de connexion de commande de ressources radio, RRC, par la réception, au noeud de réseau d'accès (5) et depuis un équipement utilisateur, UE, (3), d'une première information de capacité indiquant que l'UE (3) est utilisé par de multiples utilisateurs ;
la réception, au noeud de réseau central (14) et depuis l'UE (3), d'une demande d'enregistrement comportant des informations d'identité pour l'UE et une pluralité d'informations d'identité d'utilisateur, chacune d'elles comportant un identifiant d'utilisateur pour un utilisateur qui utilise l'UE (3), depuis l'UE (3) via le noeud de réseau d'accès (5) ; et
la transmission, par le noeud de réseau central (14) et à l'UE, d'un message d'acceptation d'enregistrement comportant une pluralité d'informations de statut d'enregistrement d'utilisateur, chacune d'elles correspondant à chaque utilisateur indiqué par l'une de la pluralité des informations d'identité d'utilisateur, dans lequel
chacune de la pluralité des informations de statut de l'enregistrement d'utilisateur indique si l'enregistrement d'utilisateur lié au chaque utilisateur est réussi ou non, et
la sélection, par le noeud de réseau d'accès (5), sur la base de la première information de capacité, du noeud de réseau central (14) pour une gestion de mobilité qui est capable de desservir l'UE (3) utilisé par les multiples utilisateurs.

9. Procédé de commande selon la revendication 8, comprenant en outre, au noeud de réseau central (14),
la demande d'informations d'abonnement pour le chaque utilisateur, sur la base des informations d'identité et de la pluralité des informations d'identité d'utilisateur ;
la réception des informations d'abonnement pour le chaque utilisateur; et
la détermination si l'enregistrement d'utilisateur lié au chaque utilisateur est réussi ou non sur la base des informations d'abonnement pour le chaque utilisateur.

10. Procédé de commande selon la revendication 8 ou 9, dans lequel
la réception comporte la réception de la demande d'enregistrement comportant les informations d'identité, la pluralité des informations d'identité d'utilisateur et une deuxième information de capacité indiquant que l'UE (3) est utilisé par de multiples utilisateurs, depuis l'UE (3) via le noeud de réseau d'accès (5).

11. Procédé de commande selon l'une quelconque des revendications 8 à 10, dans lequel
au moins l'une de la pluralité des informations d'identité d'utilisateur comporte un paramètre indiquant qu'une authentification spécifique pour au moins un utilisateur indiqué par l'au moins une de la pluralité des informations d'identité d'utilisateur est nécessaire, et
le procédé de commande comprend la réalisation de l'authentification spécifique avec l'UE (3) pour chaque utilisateur pour lequel le paramètre est compris dans les informations d'identité d'utilisateur.

12. Procédé de commande selon l'une quelconque des revendications 8 à 11, dans lequel
la chacune de la pluralité des informations de statut de l'enregistrement d'utilisateur comporte des informations de restriction liées au chaque utilisateur, les informations de restriction indiquant une restriction à laquelle l'UE (3) doit obéir.

13. Procédé de commande selon l'une quelconque des revendications 8 à 12, dans lequel
la chacune de la pluralité des informations de statut de l'enregistrement d'utilisateur comporte une cause de rejet liée au chaque utilisateur indiqué par l'une de la pluralité des informations d'identité d'utilisateur, la cause de rejet indiquant une cause pour rejeter l'enregistrement d'utilisateur lié au chaque utilisateur.

14. Procédé de commande selon la revendication 13, dans lequel
la chacune de la pluralité des informations de statut de l'enregistrement d'utilisateur comporte un temporisateur de délai d'attente lié au chaque utilisateur, le temporisateur de délai d'attente amenant l'UE (3) à ne pas déclencher la transmission d'une autre demande d'enregistrement liée au chaque utilisateur avant une expiration du temporisateur de délai d'attente.

15. Procédé de commande selon l'une quelconque des revendications 8 à 14, dans lequel
la réception comporte la réception de la demande d'enregistrement comportant les informations d'identité, la pluralité d'informations d'identité d'utilisateur et des informations d'assistance à la sélection de tranche de réseau, NSSAI, demandées par utilisateur indiqué par l'une de la pluralité des informations d'identité d'utilisateur, et
la transmission comporte la transmission du message d'acceptation d'enregistrement comportant la pluralité des informations de statut et des NSSAI autorisées par utilisateur pour lequel l'enregistrement d'utilisateur est réussi.
